# FASCICULE DE BREVET EUROPEEN

(11) **EP 2 281 634 B1**
(45) Date de publication et mention de la délivrance du brevet: **11.09.2013**
(21) Numéro de dépôt: 10171490.5
(22) Date de dépôt: 30.07.2010
(51) Int. Cl.: B02C 18/08, B02C 18/14, B02C 18/18

(54) **Dispositif de broyage des végétaux**
Vorrichtung zur Zerkleinerung von Pflanzengut
Device for crushing vegetable products

(30) Priorité: 31.07.2009 FR 0955438
(43) Date de publication de la demande: 09.02.2011
(73) Titulaire: KIVA, 39570 Courbouzon (FR)
(72) Inventeur: Willien, Nicolas, 39230 Sellières (FR); Doney, Christophe, 71580 Beaurepaire en Bresse (FR)
(74) Mandataire: Bioret, Ludovic

(56) Documents cités:
- CH-A5- 643 156
- DE-A1- 1 561 622
- DE-U1- 20 320 044
- FR-A2- 2 390 997

## Description

### 1. Domaine de l'invention

Le domaine de l'invention est celui des dispositifs de broyage de végétaux, tels que des branches dénudées ou non, des arbustes, des fleurs, des herbes, ou autres, en morceaux, ou copeaux.

De tels dispositifs, appelés broyeurs de végétaux et déchets verts, sont notamment utilisés dans le cadre de l'entretien de parcs et jardins. Ils permettent de réduire fortement le volume des végétaux traités. Dans certains cas, les copeaux peuvent être ré-utilisés, par exemple pour former du compost ou du paillis, par exemple pour recouvrir certains espaces pour lutter contre les mauvaises herbes (« mulching » en anglais).

### 2. Art antérieur

On connaît ainsi des broyeurs de végétaux avec un mécanisme de coupe à lame, adapté pour le traitement des déchets de l'ordre de 30 à 35 mm de diamètre maximum (type arbustes et jeunes haies).

On connaît également des broyeurs de végétaux plus puissants, qui mettent en oeuvre soit un mécanisme de coupe à vis sans fin, soit un rotor, ou disque, porte-couteaux, permettant de couper et d'écraser des branches jusqu'à environ 50 mm de diamètre.

Un exemple de broyeur de ce type est décrit dans le document FR 2768352. Ce broyeur comprend une zone d'alimentation et une zone d'éjection des végétaux, ainsi que des moyens pour broyer les végétaux. La zone d'éjection étant dirigée vers le haut, le broyeur met en oeuvre un ventilateur haute pression et bas débit qui crée un flux d'air aspirant les végétaux broyés/coupés en direction de la zone d'éjection.

L'utilisation d'un tel ventilateur nécessite un espace conséquent dans le broyeur, se révèle coûteuse en énergie et est source de bruit.

Le document FR 2795661 décrit un autre exemple de broyeur de végétaux et d'autres matériaux, comprenant une zone d'alimentation et une zone d'éjection des végétaux, entre lesquelles est ménagée une chambre de broyage équipée d'un rotor. Sur ce rotor sont disposés en alternance des outils de coupe et des outils de défibrage ou d'éclatement permettant d'améliorer la coupe.

Le document CH 643 156 concerne un dispositif de réduction des déchets végétaux, en particulier les plantes et les branches. Le document FR 2 390 977 concerne un dispositif d'extraction, de broyage et de dosage de copeaux et autres déchets ligneux. Le document DE 203 20 044 concerne un dispositif de broyage de matière organique, en particulier de branches. Le document DE 15 61 622 concerne une déchiqueteuse à disque.

Un inconvénient de ces dispositifs est que, malgré tout, dans certaines circonstances, la qualité de coupe obtenue n'est pas satisfaisante et que la granulométrie des particules de végétaux broyés est inégale, en fonction des caractéristiques (produit dur ou mou notamment), des dimensions et du diamètre des végétaux introduits.

Il existe également des broyeurs plus complexes, comprenant deux goulottes d'introduction des végétaux, selon la taille, notamment le diamètre, des végétaux à traiter. Ces goulottes sont distribuées de part et d'autre du disque, qui porte sur la face correspondante des couteaux de formes et de dimensions adaptées à la taille de végétaux.

### 3. Objectifs de l'invention

L'invention a notamment pour objectif de pallier ces inconvénients de l'art antérieur.

Plus précisément, un objectif de l'invention est de fournir un dispositif de broyage, ou broyeur, acceptant des matériaux mous et durs et permettant d'obtenir un broyage régulier des végétaux, c'est-à-dire des copeaux de taille sensiblement constante.

Un autre objectif, selon au moins un mode de réalisation de l'invention, est de fournir un tel dispositif présentant un débit de broyage suffisant et évitant les bourrages.

Un objectif supplémentaire de l'invention est, selon au moins un mode de réalisation de l'invention, de fournir un tel dispositif qui soit peu bruyant, en comparaison notamment des broyeurs actuels équipés de ventilateur.

Notamment, un objectif de l'invention, selon au moins un mode de réalisation de l'invention, est de fournir un tel dispositif, présentant une bonne efficacité d'éjection des copeaux, sans nécessiter de ventilateur.

Encore un autre objectif de l'invention, selon au moins un mode de réalisation de l'invention, est de fournir un tel dispositif, qui soit simple à utiliser et à fabriquer, et donc peu coûteux, en comparaison des broyeurs nécessitant deux goulottes d'alimentation, également appelées goulottes d'introduction ou goulottes d'entrée.

L'invention a également pour objectif, selon au moins un mode de réalisation de l'invention, de fournir un tel dispositif dont l'efficacité soit améliorée, par rapport aux broyeurs connus, et permettant, avec une puissance de moteur inférieure de traiter des végétaux de forts diamètres.

### 4. Exposé de l'invention

L'invention propose une solution nouvelle qui ne présente pas tout ou partie des inconvénients de l'art antérieur, sous la forme d'un dispositif de broyage des végétaux comprenant une unique goulotte d'alimentation, dans laquelle peuvent être introduits les végétaux à broyer, une chambre équipée de moyens de coupe, transformant lesdits végétaux en copeaux, et une zone d'éjection, délivrant des copeaux, lesdits moyens de coupe comprenant un rotor comprenant un disque.

Selon l'invention, lesdits moyens de coupe comprennent :
- au moins une première lame de coupe, montée du côté dudit disque orienté vers ladite goulotte, produisant des premiers copeaux, dits copeaux grossiers ;
- au moins une ouverture, permettant le passage desdits copeaux grossiers ;
- au moins une seconde lame de broyage, montée du côté dudit disque orienté vers ladite zone d'éjection, la ou lesdites secondes lames transformant lesdits copeaux grossiers en copeaux fins,
   la ou lesdites secondes lames de broyage présentant au moins deux tranchants distincts, aptes à assurer un broyage desdits copeaux grossiers et une éjection desdits copeaux fins via ladite zone d'éjection.

Ainsi, le rotor du broyeur de l'invention comprend deux séries de lames réparties de part et d'autre du disque. D'un premier côté sont disposées une ou plusieurs lames aptes à sectionner les végétaux insérés par l'intermédiaire de la zone d'alimentation, tandis que de l'autre côté se trouvent des lames assurant un deuxième niveau de coupe, et configurées pour générer un flux d'air assurant l'éjection des copeaux fins.

Il peut par exemple s'agir de lames de type « mulching », habituellement utilisées dans certaines tondeuses. Dans le cadre de l'invention, la mise en oeuvre d'une lame de type « mulching » ou fonctionnellement similaire permet non seulement d'assurer un meilleur broyage, quels que soient les végétaux à traiter, mais également de diriger les copeaux fins, ou particules de végétaux, vers la zone d'éjection qui se trouve généralement dirigée vers le haut.

Selon un mode de réalisation préférentiel de l'invention, la ou lesdites secondes lames de broyage comprennent :
- un premier tranchant présentant au moins une portion biseautée, formant un profil coupant, sur le bord d'attaque de ladite lame ;
- un second tranchant présentant une série de dents de broyage, sur le bord de ladite lame opposée audit bord d'attaque.

De façon avantageuse, lesdites dents de broyage se redressent dans une direction opposée au disque.

Cette structure permet d'une part d'obtenir un broyage fin et homogène, et d'autre une bonne éjection des copeaux obtenus.

Selon un mode de réalisation particulier, la ou lesdites secondes lames de broyage sont symétriques par rapport à l'axe de rotation dudit rotor. On peut par exemple prévoir que ladite ouverture forme un angle de 90° avec lesdites secondes lames de broyage. Bien sûr, diverses répartitions, symétriques ou non symétriques, peuvent être prévus. Le nombre de lames peut également varier, selon les modes de réalisation.

Par ailleurs, selon un mode de réalisation avantageux, la ou au moins une desdites premières lames de coupe est montée parallèlement à, et au voisinage de, la ou d'au moins une desdites ouvertures.

Avantageusement, les secondes lames sont déportées, par rapport au disque.

Selon une première approche, la ou lesdites premières lames de coupe et/ou la ou lesdites secondes lames de broyage sont solidarisées audit rotor par vissage.

Selon une autre approche, la ou lesdites premières lames de coupe et/ou la ou lesdites secondes lames de broyage sont solidarisées audit rotor par serrage entre deux entretoises.

Dans un mode de réalisation particulier, la ou lesdites secondes lames de broyage sont des lames dites de « mulching », utilisées généralement dans certaines tondeuses. La ou lesdites secondes lames de broyage peuvent également être des lames de faucheuse débroussailleuse.

### 5. Liste des figures

D'autres caractéristiques et avantages de l'invention apparaîtront plus clairement à la lecture de la description suivante de deux modes de réalisation particuliers, donnés à titre de simples exemples illustratifs et non limitatifs, et des dessins annexés, parmi lesquels :
- la figure 1 est une vue en perspective du dispositif de broyage selon l'invention ;
- la figure 2 présente une vue de la chambre de broyage du dispositif de la figure 1 ;
- la figure 3 présente une vue d'une première face du disque du dispositif de la figure 1, selon un mode de réalisation ;
- la figure 4 présente une vue de la deuxième face du disque ;
- les figures 5 et 6 présentent deux exemples de montage déportée des deuxièmes lames ;
- les figures 7A à 7E illustrent un exemple particulier de deuxième lame, respectivement : - figure 7A : vue de dessous ;
   - figure 7B : vue de côté ;
   - figure 7C : vue de dessus ;
   - figure 7D : vue selon la coupe A-A ;
   - figure 7E : vue selon la coupe B-B.

### 6. Description d'un mode de réalisation de l'invention

### 6.1 Principe général

L'invention propose donc un nouveau type de broyeur de végétaux, comprenant une goulotte d'alimentation unique, apte à recevoir tout type de végétaux à broyer (par exemple jusqu'à un diamètre de l'ordre de 9 cm) et des lames réparties des deux côtés du disque, de façon à obtenir des copeaux fins et réguliers.

Pour cela, le premier côté du disque porte classiquement une ou plusieurs lames, générant des premiers copeaux, appelés par la suite copeaux grossiers. L'arbre du rotor porte par ailleurs, du second côté du disque (c'est-à-dire à l'arrière du disque, l'avant du disque étant orienté vers la goulotte d'alimentation), un second jeu de lames, par exemple une ou plusieurs lames de mulching habituellement utilisée sur les tondeuses, adapté pour assurer deux fonctions :
- transformer en copeaux fins les copeaux grossiers ;
- éjecter les copeaux fins vers l'extérieur.

Cette approche présente ainsi, notamment, le triple avantage de :
- permettre le traitement indifférencié de tout type de végétaux, avec introduction via la goulotte unique ;
- produire des copeaux fins et homogènes, donc aisément ré-exploitables, pour le compost ou le paillage par exemple ;
- ne pas nécessiter de ventilateur pour éjecter les copeaux fins.

### 6.2 Structure d'un exemple de broyeur mettant en oeuvre l'invention

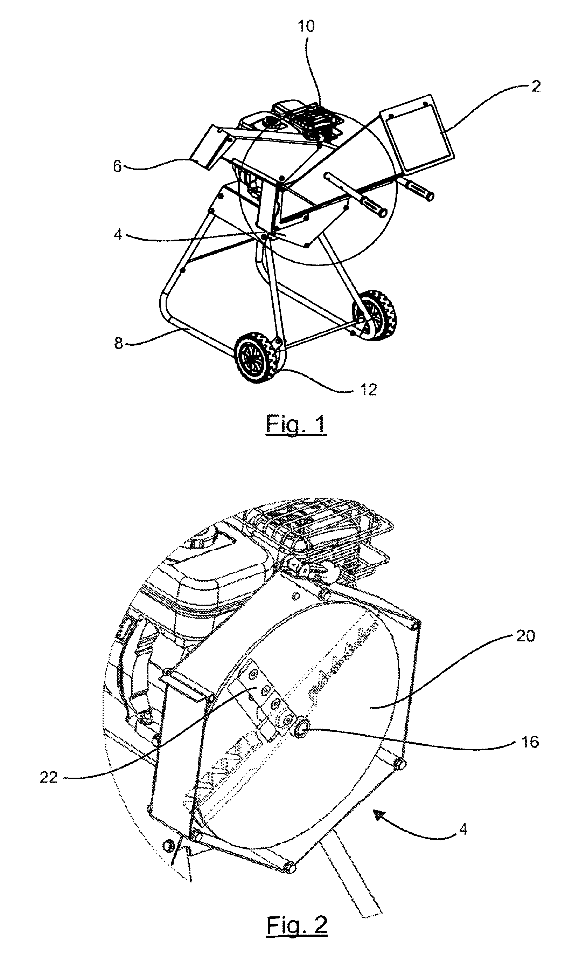

On a représenté, sur la figure 1, une vue en perspective d'un exemple de broyeur de végétaux selon l'invention. De manière classique, le broyeur comprend une goulotte d'alimentation 2 et une zone, ou goulotte, d'éjection 6 entre lesquelles est ménagée une chambre de broyage 4 (représentée sur la figure 2).

On distingue, sur cette figure 1, le moteur 10 d'entraînement du rotor (figure 2) situé dans la chambre de broyage 4. Ces éléments sont montés sur un châssis 8, qui peut avantageusement être déplacé à l'aide des deux roues de transport 12.

La goulotte d'alimentation 2 présente une forme par exemple tronconique ou cylindrique, et est orientée selon un angle choisi de façon à faciliter l'insertion par l'utilisateur de végétaux destinés à être broyés. La goulotte d'éjection 6 présente une extrémité adaptée et orientable pour que les morceaux, ou copeaux, de végétaux broyés tombent dans une zone prédéterminée, dans laquelle un récipient prévu à cet effet, tel qu'une brouette par exemple, peut être placé.

Un tel broyeur permet donc le hachage en copeaux de végétaux introduits dans la goulotte d'alimentation 2, par le passage de ceux-ci dans la chambre de broyage 4 dans laquelle ils sont, selon l'invention, coupés puis broyés par le rotor. Ces copeaux de végétaux sont ensuite acheminés jusqu'à l'extérieur, via la goulotte d'éjection 6, à l'aide d'un flux d'air, puis ils tombent dans le récipient afin d'être compostés ou étalés par exemple sur des massifs de fleurs ou au pied d'arbres.

### 6.3 structure du rotor

La figure 2 est une vue en perspective de la chambre de broyage 4 du broyeur de la figure 1. Un rotor est disposé dans cette chambre 4, c'est-à-dire un ensemble mobile en rotation comprenant un disque 20, de forme circulaire et plein,qui est entraîné en rotation par le moteur 10 autour d'un axe 16.

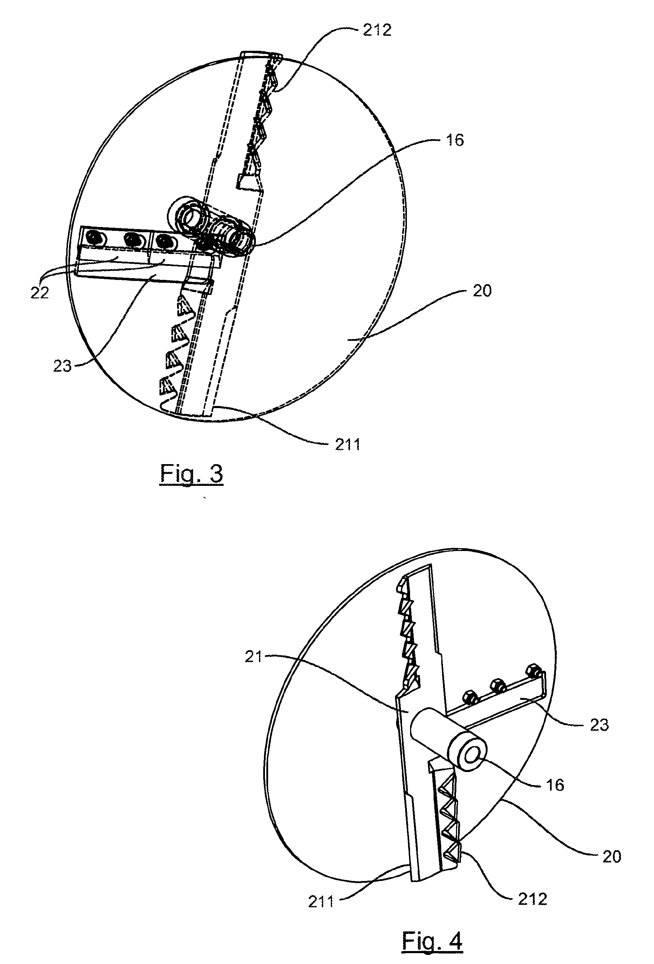

Selon l'invention, sur les deux côtés du disque 20 présentent des couteaux et/ou des lames. Sur le côté orienté vers la goulotte d'alimentation, correspondant à la face du disque qui est la première à entrer en contact avec les végétaux, est montée un premier jeu de couteaux comprenant au moins un couteau 22 (deux couteaux montées l'un à côté de l'autre dans le mode de réalisation illustré, comme cela apparaît plus clairement sur la figure 3). Ces couteaux 22 peuvent être montés sur le disque ou sur l'arbre 16. Ils assurent une première coupe des végétaux introduits, en petits morceaux, ou copeaux grossiers.

Sur le second côté du rotor (correspondant à la face du disque orientée vers la goulotte d'éjection) est placé une seconde lame, ou un second jeu de lames, 21, présentant deux tranchants, de part et d'autre de chaque lame (en pointillés sur la figure 2, et illustré également par la figure 4). Il peut notamment s'agir de lames de type « mulching », classiquement utilisées dans certaines tondeuses. Il est d'ailleurs possibles, selon les modes de réalisation, d'utiliser des lames « mulching » prévues à l'origine pour les tondeuses.

Il peut également s'agir, plus généralement, de lames de faucheuses débroussailleuses.

Ces lames « mulching » présentent un premier tranchant, ou côté, coupant 211 et un second tranchant, ou côté, denté 212, servant à broyer les morceaux qui ont été coupés.

Ces lames assurent ainsi un broyage des copeaux grossiers, coupés préalablement par les couteaux 22 placés sur la première face du disque 20, et qui sont passés de l'autre côté du rotor via l'ouverture 23 formée dans ce disque. L'ouverture est placée parallèlement aux couteaux 22, devant (par rapport au sens de rotation) ceux-ci, de façon que les végétaux pénètrent partiellement dans cette ouverture, puis soient coupées, les copeaux grossiers se retrouvant de l'autre côté du rotor, pour être broyés par les secondes lames « mulching », pour former des copeaux fins et réguliers, quelles que soient les dimensions d'origine des végétaux.

La lame de mulching 21 est ici un élément unique, symétrique par rapport à l'axe 16, et présentant donc deux premiers tranchants 211 et deux seconds tranchants, ou séries de dents, 212. La lame 21 définit un angle de 90° avec l'ouverture 23.

Il peut bien sûr y avoir plusieurs lames. Par ailleurs, d'autres répartitions et placements des lames sont possibles.

On notera ici, par ailleurs, que le broyeur de l'invention ne comprend qu'une unique goulotte d'alimentation, contrairement à certains broyeurs plus complexes, qui comprennent deux goulottes, selon les diamètres des végétaux à traiter. Dans ce cas, le rotor comprend des couteaux adaptés, de chaque côté du disque, pour traiter de façon adaptée chaque type de végétal. En revanche, selon l'invention, tous les végétaux peuvent être introduits dans la même goulotte, et le traitement se fait en deux passes : une première coupe, délivrant les copeaux grossiers, puis une seconde coupe, ou broyage, produisant des copeaux fins et homogènes.

L'efficacité de cette approche permet par exemple, avec un moteur de 6 CV, de traiter des végétaux d'un diamètre jusqu'à 9 cm, alors que ceci nécessitait selon l'art antérieur une puissance supérieure.

La deuxième fonction du second jeu de lames « mulching » est de créer, grâce à son profil (les dents forment un angle par rapport au disque, comme décrit plus précisément par la suite), un flux d'air aspirant les copeaux de végétaux formés pour les envoyer vers la zone d'éjection 6. L'utilisation d'une telle lame (ou d'un jeu de lames selon les modes de réalisation) permet ainsi de s'affranchir de l'utilisation d'une turbine/ventilateur, et donc de réduire l'encombrement, le volume sonore et le coût.

### 6.4 détails sur les premiers moyens de coupe

On a représenté, en figure 3, la première face du disque 20, selon le mode de réalisation illustré. Deux couteaux 22 sont disposés perpendiculairement à l'axe d'entraînement 16 sur cette face afin de découper les végétaux introduits en morceaux, ou copeaux grossiers (premier niveau de coupe). Ces couteaux 22 sont fixés sur le rotor au moyen de vis, ou tout autre moyen de fixation connu de l'homme du métier, notamment pour permettre leur remplacement ou leur affûtage. La lame de type « mulching » 21, monté à l'arrière du disque 20, c'est-à-dire du côté du disque orienté vers la zone d'éjection, apparaît en pointillés.

### 6.5 détails sur les seconds moyens de coupe

La figure 4 représente la seconde face du disque 20, selon le mode de réalisation illustré, sur laquelle est fixée autour de l'axe 16, une lame 21 de type « mulching » pour hacher, ou broyer, les copeaux grossiers et former des copeaux fins, et ensuite les éjecter. La lame est dessinée de manière à couper les copeaux grossiers dans un premier temps au moyen d'un profil biseauté coupant 211 sur un premier bord, le bord d'attaque, de ladite lame 21. Les copeaux obtenus sont ensuite hachés encore plus finement avec le profil denté 212 de la lame se trouvant sur le second bord de la lame, le second profil est relevé par rapport au premier de manière à expulser les copeaux vers la goulotte d'éjection 6.

Cette seconde lame 21 peut notamment être une lame classique destinée aux tondeuses pour le « mulching ». Elle peut être solidarisée à l'arbre 16 ou au disque 20, par exemple par vissage ou par tout moyen adéquat.

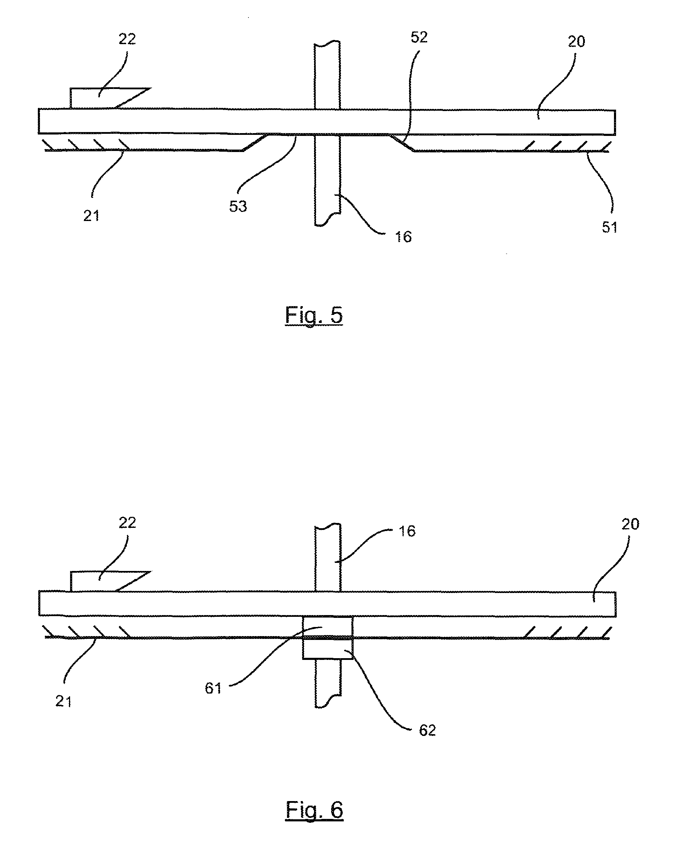

Selon des modes de réalisation particuliers, la ou les lames 21 sont déportées, par rapport au disque 20, comme illustré par les figures 5 et 6.

Dans l'exemple de la figure 5, les lames comprennent :
- une portion de coupe 51, sensiblement parallèle au disque 20, et pourvue de dents au moins sur une partie éloignée du centre du disque ;
- une portion inclinée 52, s'étendant depuis le disque 20, et assurant le déport ; et
- le cas échéant, une portion 53 s'étendant le long du disque 20, au voisinage de l'arbre 16, et permettant une solidarisation au disque, par exemple par vissage.

Dans l'exemple de la figure 6, la ou les lames 21 sont montées entre deux entretoises 61 et 62 montées sur l'arbre 16. L'entretoise 61 assure le déport par rapport au disque 20.

### 6.6 exemple particulier de seconde lame

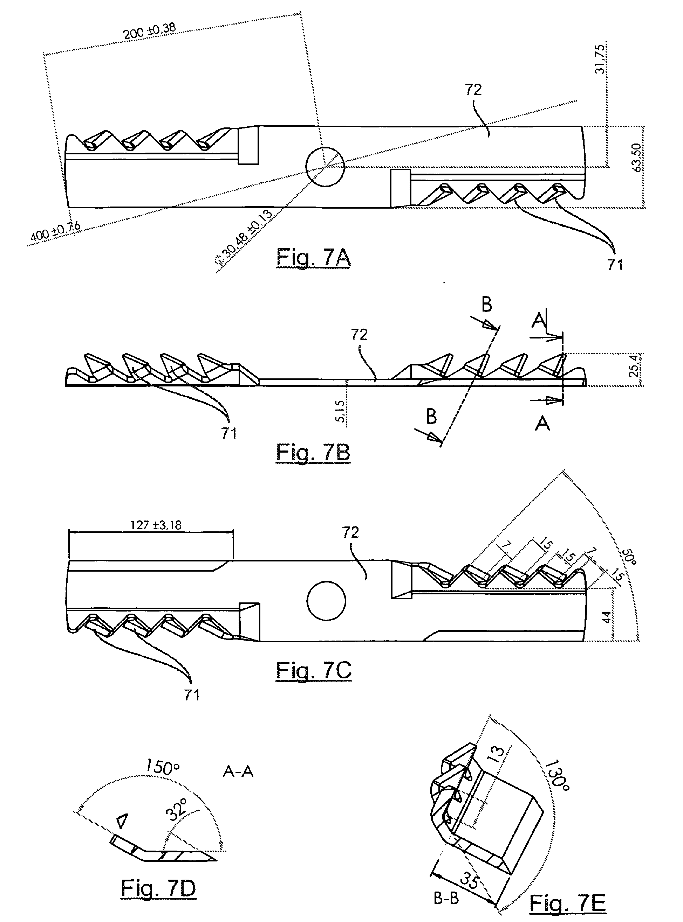

Les figures 7A à 7E illustrent de façon précise un exemple de seconde lame 21. Plus précisément, ces figures présentent la lame 21 :
- figure 7A : vue de dessous ;
- figure 7B : vue de côté ;
- figure 7C : vue de dessus ;
- figure 7D : vue selon la coupe A-A ;
- figure 7E : vue selon la coupe B-B.

Il n'est pas nécessaire de décrire de façon détaillée ces figures, les vues et les cotes fournissant l'ensemble des informations nécessaires pour reproduire une telle lame.

On note que les dents 71 se redressent sensiblement verticalement, le plan horizontal étant défini par la surface 72 de la lame (figure 7B), formant ainsi un angle de l'ordre de 90°, et sont inclinées vers les extrémités de la lame. La forme particulière de ces dents permet d'optimiser le broyage et d'assurer l'éjection des copeaux.

## Revendications

1. Dispositif de broyage des végétaux comprenant une unique goulotte d'alimentation (2), dans laquelle peuvent être introduits les végétaux à broyer, une chambre (4) équipée de moyens de coupe, transformant lesdits végétaux en copeaux, et une zone d'éjection (6), délivrant des copeaux, lesdits moyens de coupe comprenant au moins un rotor comprenant un disque (20), au moins une première lame de coupe (22), montée du côté dudit disque (20) orienté vers ladite goulotte (2), produisant des premiers copeaux, dits copeaux grossiers, et au moins une ouverture (23), permettant le passage desdits copeaux grossiers,
**caractérisé en ce que** lesdits moyens de coupe comprennent en outre au moins une seconde lame de broyage (21), montée du côté dudit disque orientée vers ladite zone d'éjection (6), la ou lesdites secondes lames (21) transformant lesdits copeaux grossiers en copeaux fins, la ou lesdites secondes lames de broyage (21) présentant au moins deux tranchants distincts (211, 212), aptes à assurer un broyage desdits copeaux grossiers et une éjection desdits copeaux fins via ladite zone d'éjection (6).

2. Dispositif selon la revendication 1, **caractérisé en ce que** la ou lesdites secondes lames de broyage (21) comprennent :
- un premier tranchant (211) présentant au moins une portion biseautée, formant un profil coupant, sur le bord d'attaque de ladite lame ;
- un second tranchant (212) présentant une série de dents de broyage, sur le bord de ladite lame opposée audit bord d'attaque.

3. Dispositif selon la revendication 2, **caractérisé en ce que** lesdites dents de broyage (212) se redressent dans une direction opposée au disque (20).

4. Dispositif selon l'une quelconque des revendications 1 à 3, **caractérisé en ce que** la ou lesdites secondes lames de broyage (21) sont symétriques par rapport à l'axe de rotation dudit rotor.

5. Dispositif selon la revendication 4, **caractérisé en ce que** ladite ouverture (23) forme un angle de 90° avec lesdites secondes lames de broyage (21).

6. Dispositif selon l'une quelconque des revendications 1 à 5, **caractérisé en ce que** la ou au moins une desdites premières lames de coupe (22) est montée parallèlement à, et au voisinage de, la ou d'au moins une desdites ouvertures (23).

7. Dispositif selon l'une quelconque des revendications 1 à 6, **caractérisé en ce que** la ou lesdites secondes lames (21) sont déportées par rapport audit disque (20).

8. Dispositif selon l'une quelconque des revendications 1 à 7, **caractérisé en ce que** la ou lesdites premières lames de coupe (22) et/ou la ou lesdites secondes lames de broyage (21) sont solidarisées audit rotor par vissage.

9. Dispositif selon l'une quelconque des revendications 1 à 8, **caractérisé en ce que** la ou lesdites premières lames de coupe (22) et/ou la ou lesdites secondes lames de broyage (21) sont solidarisées audit rotor par serrage entre deux entretoises.

10. Dispositif selon l'une quelconque des revendications 1 à 9, **caractérisé en ce que** la ou lesdites secondes lames de broyage (21) présentent deux tranchants distincts, de part et d'autre de chaque lame (21).

11. Dispositif selon la revendication 10, **caractérisé en ce que** la ou lesdites secondes lames de broyage (21) comprennent, de part et d'autre de chaque lame (21), un premier tranchant (211) et un second tranchant (212) présentant une série de dents de broyage.

## Patentansprüche

1. Vorrichtung zur Zerkleinerung von Pflanzengut, umfassend eine einzige Zuführrutsche (2), in die das zu zerkleinernde Pflanzengut eingeführt werden kann, eine Kammer (4), die mit Schneidmitteln, die die Pflanzen in Schnitzel umwandeln, und mit einer Auswurfzone (6), die die Schnitzel auswirft, ausgestattet ist, wobei die Schneidmittel mindestens einen Rotor besitzen, umfassend eine Scheibe (20), mindestens ein erstes Schneidblatt (22), das auf der Seite der Scheibe (20), die zur Rutsche (2) gewandt ist, montiert ist und erste, grobe Schnitzel genannt, liefert, und mindestens eine Öffnung (23), die den Durchgang der groben Schnitzel gestattet, **dadurch gekennzeichnet, dass** die Schneidmittel ferner mindestens ein zweites Zerkleinerungsblatt (21) umfassen, das auf der Seite der Scheibe zur Auswurfzone (6) gerichtet montiert ist, wobei das oder die Schneidblätter (21) die groben Schnitzel in feine Schnitzel umwandeln, wobei das oder die zweiten Zerkleinerungsblätter (21) mindestens zwei getrennte Schneiden (211, 212) aufweisen, die geeignet sind, eine Zerkleinerung der groben Schnitzel und einen Auswurf der feinen Schnitzel über die Auswurfzone (6) zu gewährleisten.

2. Vorrichtung nach Anspruch 1, **dadurch gekennzeichnet, dass** das oder die zweiten Zerkleinerungsblätter (21) Folgendes umfassen:
- eine erste Schneide (211), die mindestens einen abgeschrägten Abschnitt, der ein Schneidprofil bildet, am Angriffsrand des Schneidblattes aufweist;
- eine zweite Schneide (212), die eine Reihe von Zerkleinerungszähnen an dem Rand des Schneidblattes, der dem Angriffsrand gegenüberliegt, aufweist.

3. Vorrichtung nach Anspruch 2, **dadurch gekennzeichnet, dass** die Zerkleinerungszähne (212) in eine zur Scheibe (20) entgegengesetzte Richtung stehen.

4. Vorrichtung nach einem der Ansprüche 1 bis 3, **dadurch gekennzeichnet, dass** das oder die zweiten Zerkleinerungsblätter (21) zur Drehachse des Rotors symmetrisch sind.

5. Vorrichtung nach Anspruch 4, **dadurch gekennzeichnet, dass** die Öffnung (23) einen Winkel von 90° mit den zweiten Zerkleinerungsblättern (21) bildet.

6. Vorrichtung nach einem der Ansprüche 1 bis 5, **dadurch gekennzeichnet, dass** das oder mindestens eines der ersten Schneidblätter (22) parallel zu und in der Nähe von der oder mindestens einer der Öffnungen (23) montiert ist.

7. Vorrichtung nach einem der Ansprüche 1 bis 6, **dadurch gekennzeichnet, dass** da oder die zweiten Schneidblätter (21) zur Scheibe (20) versetzt sind.

8. Vorrichtung nach einem der Ansprüche 1 bis 7, **dadurch gekennzeichnet, dass** das oder die ersten Schneidblätter (22) und/oder das oder die zweiten Zerkleinerungsblätter (21) mit dem Rotor durch Schrauben verbunden sind.

9. Vorrichtung nach einem der Ansprüche 1 bis 8, **dadurch gekennzeichnet, dass** das oder die ersten Schneidblätter (22) und/oder das oder die zweiten Zerkleinerungsblätter (21) mit dem Rotor durch Festklemmen zwischen zwei Querstreben verbunden sind.

10. Vorrichtung nach einem der Ansprüche 1 bis 9, **dadurch gekennzeichnet, dass** das oder die zweiten Zerkleinerungsblätter (21) zwei getrennte Schneiden beiderseits jedes Schneid blattes (21) aufweisen.

11. Vorrichtung nach Anspruch 10, **dadurch gekennzeichnet, dass** das oder die zweiten Zerkleinerungsblätter (21) beiderseits jedes Schneidblattes (21) eine erste Schneide (211) und eine zweite Schneide (212) mit einer Reihe von Zerkleinerungszähnen aufweisen.

## Claims

1. Device for shredding plants, comprising a single feed chute (2) into which the plants to be shredded can be introduced, a chamber (4) equipped with cutting means which transforms the said plants into cuttings, and an ejection zone (6) which delivers cuttings, the said cutting means comprising at least one rotor comprising a disc (20), at least one first cutting blade (22) which is mounted on the side of the said disc (20) oriented towards the said chute (2) and produces first cuttings, which are referred to as "coarse cuttings", and at least one aperture (23) which enables the said coarse cuttings to pass through,
**characterised in that** the said cutting means further comprise at least one second shredding blade (21) which is mounted on the side of the said disc oriented towards the said ejection zone (6), the said second shredding blade or blades (21) transforming the said coarse cuttings into fine cuttings, the said shredding blade or blades (21) having at least two distinct cutting edges (211, 212) which are capable of carrying out shredding of the said coarse cuttings and ejection of the said fine cuttings via the said ejection zone (6).

2. Device according to Claim 1, **characterised in that** the said second blade or blades (21) comprise(s):
- a first cutting edge (211) having at least one bevelled portion, which forms a cutting profile, on the leading edge of the said blade;
- a second cutting edge (212) having a series of shredding teeth on the opposite edge of the said blade from the said leading edge.

3. Device according to Claim 2, **characterised in that** the said shredding teeth (212) stand up straight in the opposite direction to the disc (20).

4. Device according to any of Claims 1 to 3, **characterised in that** the said second shredding blade or blades (21) is/are symmetrical in relation to the axis of rotation of the said rotor.

5. Device according to Claim 4, **characterised in that** the said aperture (23) forms an angle of 90° with the said second shredding blades (21).

6. Device according to any of Claims 1 to 5, **characterised in that** the said first cutting blade, or at least one of the said first cutting blades (22), is mounted parallel to, and in the vicinity of, the said aperture, or at least one of the said apertures (23).

7. Device according to any of Claims 1 to 6, **characterised in that** the said second blade or blades (21) is/are offset in relation to the said disc (20).

8. Device according to any of Claims 1 to 7, **characterised in that** the said first cutting blade or blades (22) and/or the said second shredding blade or blades (21) is/are fastened to the said rotor by screwing.

9. Device according to any of Claims 1 to 8, **characterised in that** the said first cutting blade or blades (22) and/or the said second shredding blade or blades (21) is/are fastened to the said rotor by being clamped between two struts.

10. Device according to any of Claims 1 to 9, **characterised in that** the said second shredding blade or blades (21) has/have two distinct cutting edges, either side of each blade (21).

11. Device according to Claim 10, **characterised in that** the said second shredding blade or blades (21) comprise(s), either side of each blade (21), a first cutting edge (211) and a second cutting edge (212) having a series of shredding teeth.
